# EUROPÄISCHE PATENTANMELDUNG

(11) **EP 1 679 417 A2**
(43) Veröffentlichungstag der Anmeldung: **12.07.2006**
(21) Anmeldenummer: 05027170.9
(22) Anmeldetag: 13.12.2005
(51) Int. Cl.: E05F 5/12, E05F 3/22

(54) **Gleitschiene für einen Gleitschienen-Türschliesser für zweiflügelige Türen**

(30) Priorität: 11.01.2005 DE 102005001313
(71) Anmelder: DORMA GmbH + Co. KG, 58256 Ennepetal (DE)
(72) Erfinder: Morawetz, Gerhard, 4840 Vöcklabruck (AT)

(57) **Zusammenfassung**

Die Erfindung betrifft eine Gleitschiene (1) für einen Gleitschienen-Türschließer für zweiflügelige Türen mit einer im Gleitschienenprofil (2) integrierten Schließfolgeregelung, welche in einer Montageöffnung (3) des Gleitschienenprofils (2) angeordnet ist. Die Erfindung richtete sich darauf, dass im Bodenprofil (6) der Gleitschiene (1) eine durch eine Verschlussplatte (7) angeordnete Abdeckung (5) angeordnet ist.

## Beschreibung

Die Erfindung betrifft eine Gleitschiene für einen Gleitschienen-Türschließer für zweiflügelige Türen mit in einem im Querschnitt quadratischen oder rechteckigen rohrförmigen Gleitschienenprofil integrierter Schließfolgeregelung und einer im Bereich der Schließfolgeregelung angeordneten, eine Montageöffnung für die Aufnahme der Schließfolgeregelung bildenden Profilausnehmung des Gleitschienenprofils sowie einer die Profilausnehmung überbrückenden und verschließenden Abdeckung.

Bei zweiflügeligen Türen, insbesondere bei Brand- und Rauchschutztüren, ist ein zwangsläufiges reihenfolge richtiges Schließen der beiden Türflügel zwingend erforderlich, um sicherzustellen, dass der Standflügel vor dem Gangflügel schließt und die beiden Türen im Bereich der Falz einen dichten Abschluss bilden. Bekannte Schließfolgeregelungen sind mit dem Türschließern so verbunden, dass sie eine aufeinander abgestimmte Baueinheit bilden, wobei beispielsweise elektromagnetische Feststelleinrichtungen zur Anwendung gelangen und der Gangflügel über den Schließfolgeregler mechanisch und der Standflügel elektromagnetisch festgehalten wird. Bei Unterbrechung der Stromzufuhr, z. B. im Alarmfall schließen Stand- und Gangflügel in der richtigen Reihenfolge.

Die Schließfolgeregelung ist im Regelfall im Bereich zwischen den beiden Türschließern des Stand- bzw. Gangflügels innerhalb des Hohlprofils der Gleitschiene angeordnet, d. h. in die das Gleitstück des Türschließers führende Gleitschiene integriert. Aus Gründen der Montage- bzw. Demontagemöglichkeit ist im Bereich der Schließfolgeregelung eine Ausnehmung des im Querschnitt rechteckigen oder quadratischen Gleitschienenprofils erforderlich; in der Praxis umfasst die vorgenannte Ausnehmung regelmäßig drei der vier des Hohlprofil bildenden Wandungen oder das gesamte Hohlprofil. Dies führt zum einen zu einer Schwächung des Gleitschienenprofils im Bereich der Schließfolgeregelung, zum anderen ist für den Verschluss der Ausnehmung die Bereitstellung einer im Querschnitt U-förmigen oder durch ein vollständiges Hohlprofil gebildeten Abdeckung erforderlich, die mit an ihren freien Enden angeordneten Anschlusskappen zwecks Verbindung mit dem Gleitschienenprofil das anschließende Gleitschienenprofil übergreift.

Neben dem hohen technischen Aufwand für die vorbekannte Lösung wird als nachteilig empfunden, dass die die Schließfolgeregelung verschließende Abdeckung äußerlich erkennbar ist und der Außendurchmesser der Gleitschiene im Überlappungsbereich zwischen der Abdeckung und dem anschließenden Gleitschienenprofil vergrößert ist.

Aufgabe der Erfindung ist es, bei einer Gleitschiene mit integrierter Schließfolgeregelung die vorstehend genannten Nachteile zu vermeiden, d. h., eine technisch einfache, kostengünstig herstellbare und äußerlich nicht auffällige Möglichkeit einer Abdeckung der Montageöffnung vorzuschlagen, die das Gleitschienenprofil praktisch nicht schwächt und kostengünstig ist.

Die Erfindung löst die gestellte Aufgabe mit der Lehre nach Anspruch 1.

Nach Maßgabe der Erfindung reduziert sich die Profilausnehmung auf das Fehlen einer von vier das Hohlprofil bildenden Wandungen, wobei die fehlende Wandung nach Installation der Schließfolgeregelung durch die Verschlussplatte im Sinne einer Vervollständigung des Hohlprofils ersetzt wird. Das Gleitschienenprofil muss erfindungsgemäß nicht mehr bezüglich seines wesentlichen tragenden Querschnittes getrennt werden, ein überlappen der Abdeckung mit dem anschließenden Hohlprofil und damit eine störende Veränderung des Außendurchmessers entfällt ebenfalls.

Weitere Merkmale der Erfindung sind Gegenstand der Unteransprüche.

In vorteilhafter Ausgestaltung der Erfindung weist das Bodenprofil des Gleitschienenprofils zwei diametral gegenüberliegende Führungsnuten auf, in denen die Verschlussplatte verschiebbar und feststellbar geführt ist. Da es sich bei Gleitschienen der vorgenannten Gattung im Regelfall um Strangpressprofile handelt, wird weiterhin vorgeschlagen, die Führungsnuten über die Länge der Gleitschiene anzuordnen, so dass während der Montage der Gleitschiene die Verschlussplatte von einer Stirnseite der Gleitschiene aus in die Gleitschiene eingeschoben werden kann. Die Verschlussplatte ersetzt somit das fehlende Bodenprofil und steift die Gleitschiene im Bereich der Schließfolgeregelung im Sinne einer Vervollständigung der Gleitschiene aus.

Die Erfindung wird nachfolgend anhand eines Ausführungsbeispieles näher erläutert.

Es zeigen:
- Figur 1:: Einen Teilabschnitt einer Gleitschiene in perspektivischer Darstellung,
- Figur 2:: eine Draufsicht auf eine Gleitschiene gemäß Figur 1.

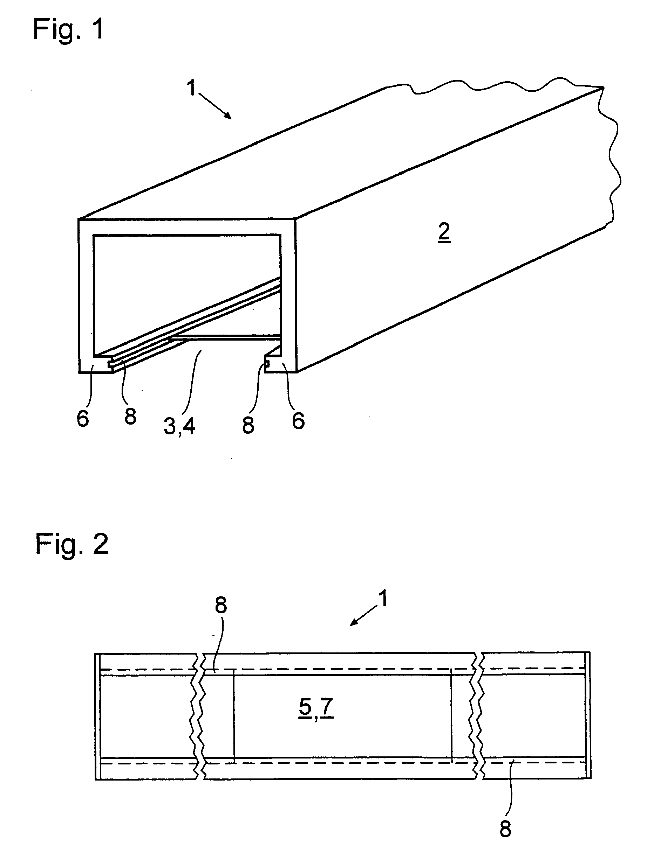

Eine Gleitschiene 1 nach den Figuren 1 und 2 besteht aus einem, ein Gleitstück eines Türschließers führenden, im Querschnitt etwa rechteckigen Gleitschienenprofil 2. Wie die Figuren erkennen lassen, ist im Bereich der nicht dargestellten Schließfolgeregelung eine Montageöffnung 3 in einem Bodenprofil 6 des Gleitschienenprofils 2 vorgesehen, welche eine Profilausnehmung 4 bildet, die durch eine als Verschlussplatte 7 ausgebildete Abdeckung 5 verschließbar ist. Die Verschlussplatte 7 ist in im Bodenprofil 6 angeordneten Führungsnuten 8 verschiebbar und feststellbar geführt. Die Führungsnuten 8 sind ausweislich Figur 2 über die gesamte Länge der Gleitschiene 1 durchgeführt.

### Bezugszeichenliste

- 1: Gleitschiene
- 2: Gleitschienenprofil
- 3: Montageöffnung
- 4: Profilausnehmung
- 5: Abdeckung
- 6: Bodenprofil
- 7: Verschlussplatte
- 8: Führungsnuten

## Patentansprüche

1. Gleitschiene (1) für einen Gleitschienen-Türschließer für zweiflügelige Türen mit in einem im Querschnitt quadratischen oder rechteckigen rohrförmigen Gleitschienenprofil (2) integrierter Schließfolgeregelung und einer im Bereich der Schließfolgeregelung angeordneten, eine Montageöffnung (3) für die Aufnahme der Schließfolgeregelung bildenden Profilausnehmung (4) des Gleitschienenprofils (2) sowie einer die Profilausnehmung (4) überbrückenden und verschließenden Abdeckung (5), **dadurch gekennzeichnet, dass** die Profilausnehmung (4) aus einer Öffnung im Bodenprofil (6) der Gleitschiene (1) und die Abdeckung (5) aus einer die Profilausnehmung (4) abdeckenden Verschlussplatte (7) besteht.

2. Gleitschiene nach Anspruch 1, **dadurch gekennzeichnet, dass** das Bodenprofil (6) des Gleitschienenprofils (2) zwei diametral gegenüberliegende Führungsnuten (8) aufweist.

3. Gleitschiene nach Anspruch 1 und 2, **dadurch gekennzeichnet, dass** die Verschlussplatte (7) verschiebbar und feststellbar in den Führungsnuten (8) geführt ist.

4. Gleitschiene nach einem der Ansprüche 1 bis 3, **dadurch gekennzeichnet, dass** die Führungsnuten (8) über die Länge der Gleitschiene (1) angeordnet sind.
